# EUROPÄISCHE PATENTSCHRIFT

(11) **EP 1 389 567 B1**
(45) Veröffentlichungstag und Bekanntmachung des Hinweises auf die Patenterteilung: **03.07.2013**
(21) Anmeldenummer: 03018372.7
(22) Anmeldetag: 13.08.2003
(51) Int. Cl.: B60R 13/02, B62D 65/00, B62D 25/06, B62D 65/04

(54) **Dachmodul für ein Fahrzeug mit zur Montage faltbarem Himmel sowie Herstellungsverfahren dafür**
A vehicle roof module having a foldable roof lining for its assembly, and method of manufacturing the same
Module de toit de véhicule avec ciel pliant pour son montage, et sa méthode de fabrication

(30) Priorität: 14.08.2002 DE 10237321
(43) Veröffentlichungstag der Anmeldung: 18.02.2004
(73) Patentinhaber: Webasto AG, 82131 Stockdorf (DE); Sandler AG, 95126 Schwarzenbach/Saale (DE)
(72) Erfinder: Pschorn, Heinz, 85221 Dachau (DE); Koelbl, Michael, 82061 Neuried (DE); Troeger, Klaus, 95120 Schwarzenbach/Saale (DE)
(74) Vertreter: Schwan - Schwan - Schorer

(56) Entgegenhaltungen:
- EP-A- 0 557 580
- EP-B- 0 964 814
- DE-A- 10 048 130
- DE-A- 19 959 543
- FR-A- 2 529 844
- US-A- 4 840 832
- US-A1- 2002 006 755

## Beschreibung

Die vorliegende Erfindung betrifft ein Dachmodul für ein Fahrzeug gemäß dem Oberbegriff von Anspruch 1 sowie ein entsprechendes Herstellungsverfahren.

Ein solches gattungsgemäßes Dachmodul ist aus der EP 0 964 814 B1 bekannt, wobei das Dachmodul eine Metallaußenhaut und eine sandwichartig damit verbundene Innenschale aus einem Schaumkunststoff aufweist, die auf ihrer von der Außenhaut abgewandten Seite mit einem textilen oder folienartigen Bezugsmaterial beschichtet ist, welches den Dachhimmel bildet. Im Randbereich ist die Schaumkunststoff-Innenschale aufgeteilt, so dass der untere Teil für die Montage des Dachmoduls in einem Karosserierahmen mittels Einsetzen von oben nach unten weggeklappt werden kann und nach dem Einsetzen des Dachmoduls in den Karosserierahmen von unten wieder an dem Karosserierahmen bzw. Seitenholm befestigt werden kann. Das nach-unten-Klappen der Randbereiche der Schaumkunststoff-Innenschale erfolgt unter partieller Faltung in den Eckbereichen. Der Himmelstoff ist komplett mit Polyurethan (PU) hinterspritzt, wodurch sich ein hoher PU-Verbrauch und Probleme bei der Faltung in den Eckbereichen ergeben. Ferner können sich Abzeichnungen nach einer Wärmelagerung ergeben. Insgesamt handelt es sich um einen aufwendigen und komplexen Prozess, der relativ hohe Kosten mit sich bringt.

Ein weiteres gattungsgemäßes Dachmodul ist aus der FR 2 529 844 A1 bekannt, wobei hier die Eckbereiche in rechtwinkliger Weise komplett ausgeschnitten sind, was Designprobleme in diesen Bereichen mit sich bringt.

DE 199 59 543 A1 offenbart einen Himmel für ein Fahrzeugdach mit starrer Grundstruktur, der eine teilflexible Decklage aufweist, und wenigstens eine Sollknicklinie besitzt, die im gewölbten Himmelsabschnitt in zwei beabstandete Teilknicklinien aufgeteilt ist. Dadurch ist ein Himmelsabschnitt zur Montage am Fahrzeugdach nach unten zur Decklage hin umbiegbar oder abknickbar.

Die Grundstruktur enthält im Bereich der Sollknicklinie eine Dehnungseinrichtung. Durch diese wird eine Straffung der Decklage erzielt, sodass die Stelle der erfolgten Umbiegung beim eingebauten Himmel nicht mehr erkennbar ist.

In DE 100 48 130 A1 wird ein Dachmodul für ein Kraftfahrzeug dargestellt, welches aus einer festen Dachhaut sowie einem damit verbundenen Dachhimmel besteht, dessen Randbereiche über die Ränder der Dachhaut überstehen. Für den Durchtritt durch die vom Karosserierahmen begrenzte Karosserieöffnung bei der Montage sind diese Randbereiche partiell gefaltet und diese Faltung ist vorübergehend fixiert, wobei hierzu punktuell an der den Wänden des Kraftfahrzeugs zugewandten Seite des Dachhimmels befindliche Klettverschlüsse vorgesehen sind.

DE 100 07 556 A1 beschreibt eine Trägerkomponente aus Vliesstoff für Formteile wie Dachhimmel und andere Innenausstattungsteile für Personenkraftwagen und Nutzfahrzeuge, die aus einem beidseitig genadelten einschichtigen Vliesstoff besteht und aus einer Mischung aus Matrixfasern und Bindefasern zusammengesetzt ist.

DE 42 05 464 C1 handelt von einem Verfahren zur Herstellung eines Innenausstattungsteils für Fahrzeuge, insbesondere eines Autohimmels. Ein Stapelfaservliesstoff aus Polyethylenterephthalat-Fasern und aus faserförmigen, bindenden Bestandteilen wird mindestens einem Temperprozess unterzogen, um die Wärmestandfestigkeit des Innenausstattungsteils zu erhöhen.

In den älteren deutschen Patentanmeldungen mit den Aktenzeichen 102 24 967.9, 102 24 968.7, 102 24 969.5 und 102 24 970.9 sind weitere Dachmodule mit für die Endmontage faltbarem Himmel beschrieben.

Aus der DE 40 41 934 A1 ist ein von unten an der Dachkonstruktion der Karosserie eines Personenkraftwagens montierbarer Himmel bekannt, der als Wirrfaservlies aus Polyesterfasern ausgebildet ist, wobei auf der Innenseite eine dekorative Kaschierung ohne Verwendung eines Zusatzklebers aufgebracht ist.

Es ist Aufgabe der vorliegenden Erfindung, ein Dachmodul für ein Fahrzeug mit faltbarem Himmel zu schaffen, welches eine gute Faltbarkeit ohne Abzeichnung der Faltlinien auf der Himmelinnenseite mit guten akustischen Eigenschaften vereint. Ferner soll ein entsprechendes Herstellungsverfahren geschaffen werden.

Diese Aufgabe wird erfindungsgemäß gelöst durch ein Dachmodul gemäß Anspruch 1 sowie ein Herstellungsverfahren gemäß Anspruch 11. Bei dieser Lösung ist vorteilhaft, dass dadurch, dass der Himmel aus Polyethylenterephthalat (PET) gefertigt ist, eine leichte Faltbarkeit des Himmels ohne bleibende Abzeichnung auf der Himmelinnenseite erzielt werden kann. Ferner kann, insbesondere wenn der Himmel als Vlies aus PET-Fasern ausgebildet ist, ein niedriges Flächengewicht mit sehr guten akustischen Eigenschaften vereint werden.

Vorzugsweise sind die Faltlinien als von der der Außenschale zugewandten Seite des Himmels in den Himmel mittels Lasereinschneiden eingeschnittene Kerben ausgebildet. Auf diese Weise können die Faltlinien in präziser und effizienter Weise realisiert werden.

In weiterer vorteilhafter Ausgestaltung der Erfindung weist der Himmel eine an der Unterseite der Außenschale angebrachte Trägerschicht sowie eine Dekorschicht auf, wobei sowohl die Trägerschicht als auch die Dekorschicht aus PET gefertigt sind und die Dekorschicht auf die von der Außenschale abgewandte Seite der Trägerschicht klebstofffrei aufgeschmolzen ist. Auf diese Weise kann auf einen Kaschierkleber verzichtet werden, wodurch ein sortenreines Produkt erhalten wird, das vollständig recycelt werden kann.

Weitere vorteilhafte Ausgestaltungen der Erfindung ergeben sich aus den Unteransprüchen.

Im folgenden wird die Erfindung anhand der beigefügten Zeichnungen beispielhaft näher erläutert. Dabei zeigen:
- Fig. 1: eine Draufsicht auf einen erfindungsgemäßen Falthimmel im entfalteten Zustand;
- Fig. 2: eine Schnittansicht entlang der Linie II-II in Fig. 1;
- Fign. 3 bis 5: unterschiedliche geometrische Varianten von Falthimmeln in perspektivischer Ansicht; und
- Fig. 6: einen Teil-Querschnitt des Himmels 14.

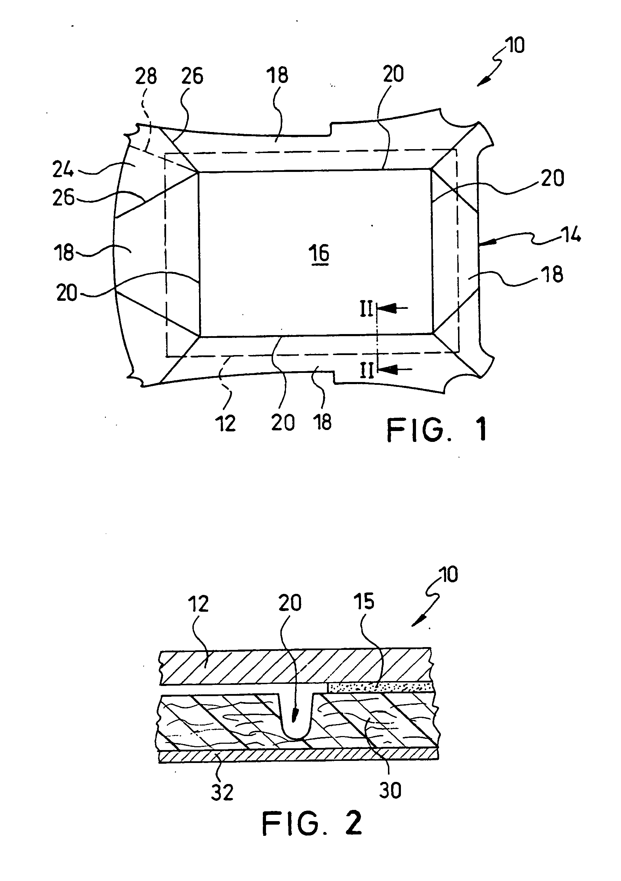

In Fig. 1 ist schematisch ein Dachmodul für ein Kraftfahrzeug gezeigt, welches eine feste Außenschale 12 und einen Himmel 14 umfasst, der mit seinem zentralen Bereich 16 an der Unterseite der festen Außenschale 12 angebracht ist, beispielsweise mittels einer Verklebung 15 (siehe Fig. 2). Die Randbereiche 18 des Himmels 14 sind entlang von Faltlinien 20 bezüglich des zentralen Bereichs 16 nach unten abklappbar. In jedem Eckbereich 24 sind zusätzlich zwei Faltlinien 26 vorgesehen, die zur Faltung des Eckbereichs 24 bezüglich der beiden benachbarten Seitenabschnitte 18 dienen. Ferner kann in jedem Eckbereich 24 eine weitere Faltlinie 28 vorgesehen sein, welche zwischen den beiden Faltlinien 26 liegt und dazu dient, den Eckbereich 24 in sich zu falten.

Die feste Außenschale 12 kann beispielsweise an ihrer Außenseite eine feste Dachhaut aus Kunststoff, Aluminium oder Stahl umfassen, die mit einer geeigneten Trägerstruktur hinterpresst ist, z.B. einer Wabenstruktur aus Papier, Metall oder Kunststoff, die beidseitig von einer mit PU getränkten Glasfasermatte stabilisiert wird.

Das Dachmodul gemäß Fig. 1 is vorgesehen, um in dem gezeigten vormontierten Zustand mit abgeklappten Randbereichen 18 des Himmels 14 von oben in eine Fahrzeugkarosserieöffnung bzw. einen Karosserierahmen eingesetzt zu werden, wobei die Außenschale 12 mit dem Karosserierahmen verklebt wird und die abgeklappten Randbereiche 18 des Himmels 14 durch den Karosserierahmen hindurch treten und nach der Befestigung der Außenschale 12 an dem Karosserierahmen von unten an den Karosserierahmen bzw. die Begrenzung der Karosserieöffnung geklappt werden, um diesen entsprechend zu verkleiden.

Gemäß Fig. 2 ist der Himmel 14 aus einer Trägerschicht 30, welche an der Unterseite der Außenschale 12 im zentralen Bereich 16 mittels einer Verklebung 15 angeklebt ist, sowie einer Dekorschicht 32 aufgebaut, welche an der Unterseite, d.h. der von der Außenschale 12 abgewandten Seite der Trägerschicht 30, angebracht ist, um die Trägerschicht 30 zu kaschieren.

Die Trägerschicht 30 besteht vorzugsweise aus einem Vlies aus PET-Fasern. Die Faltlinien 20 und 26 sind mittels Lasereinschneiden als Kerben von der der Außenschale 12 zugewandten Seite der Trägerschicht 30 in diese eingeschnitten. Die Faltlinien 28 können entsprechend ausgebildet sein. Die Schnitttiefe richtet sich nach der Materialdicke der Trägerschicht 30 sowie nach der Art der Faltung (konkav oder konvex). Die Dekorschicht 32 besteht vorzugsweise ebenfalls aus PET und wird ohne Verwendung eines Kaschierklebers durch Aufschmelzen an der Unterseite der Trägerschicht 30 befestigt. Dadurch kann ein vollständig sortenreiner Himmel 14 realisiert werden, der vollständig recycelt werden kann.

Das PET-Faservlies bietet sehr gute akustische Eigenschaften bei niedrigem Flächengewicht.

Nachdem der Himmel 14 im zusammengefalteten Zustand von oben durch die Karosserieöffnung hindurchgeschoben wurde und die Außenschale 12 mit dem Rand der Karosserieöffnung fest verbunden wurde, klappen die Randbereiche 18 sowie die Eckbereiche 24 aufgrund der Elastizität der Trägerschicht 30 und der Dekorschicht 32 wieder in ihre Ursprungsgeometrie zurück, wobei optische Abzeichnungen an der Dekorschicht 32 wieder verschwinden.

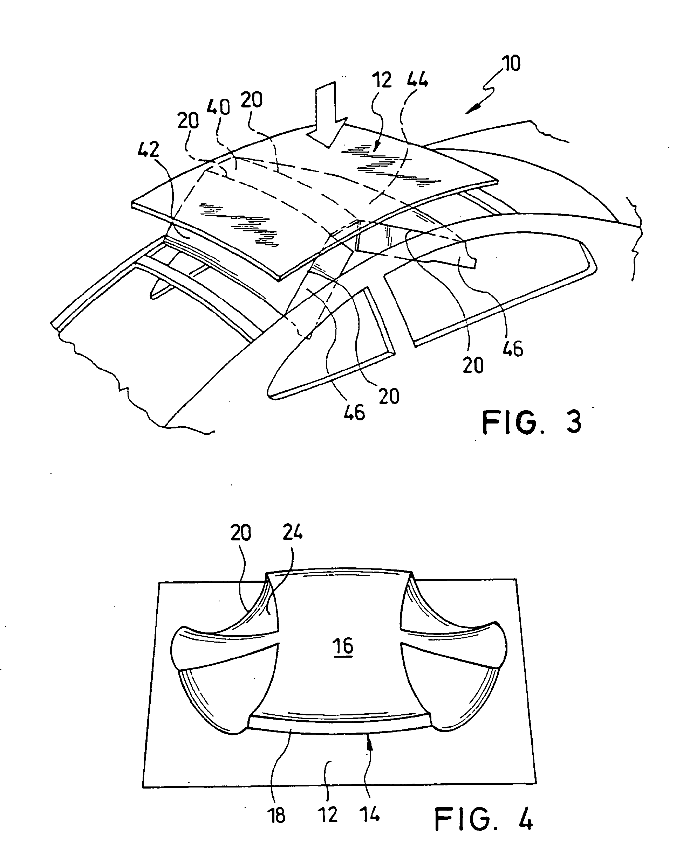

In den Fign. 3 bis 5 Abwandlungen der Faltungsgeometrie des Himmels schematisch gezeigt.

Bei der Variante gemäß Fig. 3 ist der Himmel nur in einem streifenförmigen mittleren Bereich 40 an der Außenschale 12 befestigt, während der vordere und der hintere Bereich 42 bzw. 44 für den Durchtritt durch die Karosserieöffnung als Ganzes nach unten abklappbar sind, wobei der vordere und der hintere Bereich 42, 44 jeweils seitliche Randabschnitte 46 aufweisen, die ihrerseits nach unten klappbar sind. Die seitlichen Randbereiche des streifenförmigen zentralen Bereichs 40 sind freigeschnitten, um eine Kollision der abgeklappten seitlichen Bereiche des vorderen Bereichs und des hinteren Bereichs bei der Montage des Dachmoduls zu verhindern.

Bei der Variante gemäß Fig. 4 sind die Eckbereiche 24 mit gekrümmten Faltlinien 20 versehen, wodurch diese Randbereiche für die Montage nach unten bzw. nach innen geklappte werden können. Die seitlichen Randbereiche 18 werden dabei bogenförmig nach unten gebogen.

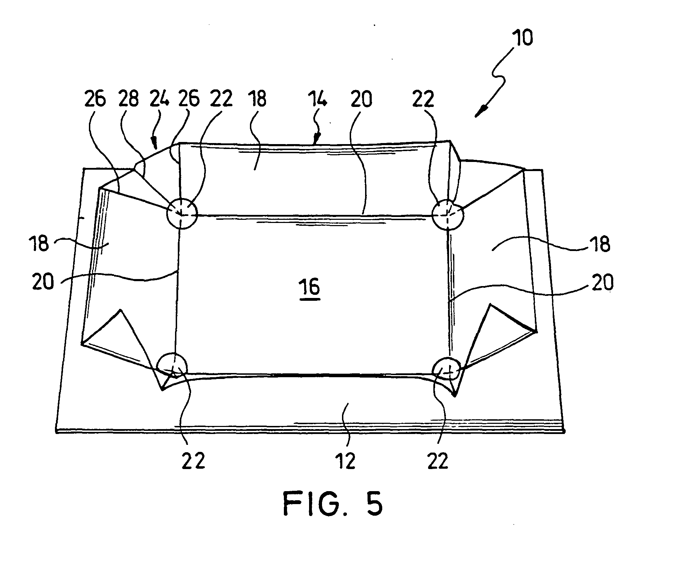

In Fig. 5 ist eine Variante gezeigt, welche sich von der Variante gemäß Fig. 1 im wesentlichen dadurch unterscheidet, dass der Himmel 14 im Bereich von Kreuzungspunkten von Faltlinien jeweils mit einer Aussparung 22 versehen ist, wodurch ein Materialstau bzw. eine Abzeichnung in diesen kritischen Bereichen vermieden werden kann.

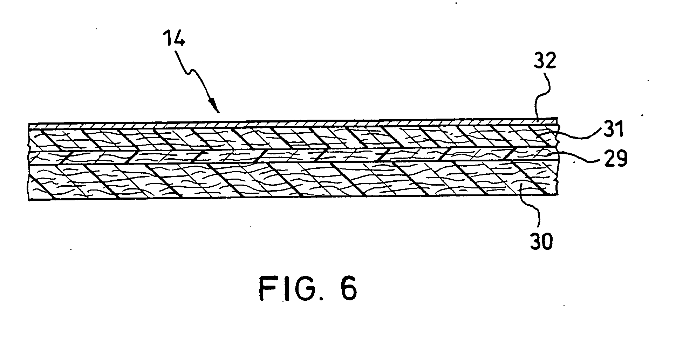

Fig. 6 zeigt den Aufbau des Himmels 14 in einem Teil-Querschnitt, bestehend aus einer Dekorschicht 32, einem Dekorrücken 31, einem Abstandsvlies 29 sowie einer Trägerschicht 30.

Die Dekorschicht 32 ist beispielsweise eine aus PET-Garn gewirkte Maschenware mit einem Flächengewicht von 150 g/m², welche mit dem Dekorrücken 31 mit Hilfe eines PUR-Hotmeltklebers auf PET-Basis verbunden ist.

Der Dekorrücken 31 besteht zum Beispiel aus einem beidseitig vermaschten Vliesstoff aus 100 % PET-Fasern mit einer Feinheit von 6,7 dtex und weist ein Flächengewicht von 300 g/m² auf. Erzeugt wird ein derartig beidseitig vermaschter Vliesstoff auf an sich aus dem Stand der Technik bekannte Weise, wie beispielsweise in "Vliesstoffe", WILEY-VCH Verlag, herausgegeben von W. Albrecht, H. Fuchs, W. Kittelmann auf den Seiten 321 ff dargestellt ist.

Ein dem Dekorrücken 31 nachgeschaltetes Abstandsvlies 29 ist exemplarisch aus einem genadelten PET-Feinfaservlies gebildet, das aus Fasern mit einer Feinheit von 2,2 dtex nach bekannten Krempelverfahren hergestellt wird und ein Flächengewicht von 120 g/m² aufweist.

Das Abstandsvlies 29 ist mit dem Dekorrücken 31 mittels eines PET-Klebevlieses fest verbunden.

Die Trägerschicht 30 ist vorzugsweise ein beidseitig genadeltes und thermisch verfestigtes Krempelvlies mit hoher Innenverfestigung, bestehend aus einer Fasermischung aus 70 % kristalliner PET-Schmelzfaser (Co-PES), 7 dtex und aus 30 % PET-Stützfaser, 28 dtex und besitzt ein Flächengewicht von 800 g/m².

Die Trägerschicht 31 ist mit dem Abstandsvlies 29 mittels eines PET-Klebevlieses fest verbunden.

Mit diesem Aufbau wird eine Elastizität einzelner Schichten alleine sowie des gesamten Schichtaufbaus insgesamt erzielt, aufgrund derer in besonders vorteilhafter Weise Knickfalten nach dem Verbau eines erfindungsgemäßen Dachmoduls 10 in einem Fahrzeug verschwinden.

### Bezugszeichenliste

- **10**: Dachmodul
- **12**: Außenschale
- **14**: Himmel
- **15**: Verklebung
- **16**: zentraler Bereich von 14
- **18**: Randbereiche
- **20**: Faltlinien
- **22**: Aussparungen
- **24**: Eckbereiche
- **26**: Faltlinien
- **28**: Faltlinien
- **29**: Abstandsvlies
- **30**: Trägerschicht
- **31**: Dekorrücken
- **32**: Dekorschicht
- **40**: mittlerer Bereich
- **42**: vorderer Bereich
- **44**: hinterer Bereich
- **46**: seitlicher Randabschnitt

## Patentansprüche

1. Dachmodul für ein Fahrzeug, welches von oben in einer Karosserieöffnung montierbar ist und eine feste Außenschale (12) und einen in seinem zentralen Bereich (16, 40) von unten fest an der Außenschale angebrachten Himmel (14) aufweist, dessen Randbereiche (18, 24, 42, 44, 46) entlang von in dem Himmel ausgebildeten Faltlinien (20, 26, 28) bezüglich des zentralen Bereichs für die Montage des Dachmoduls nach unten klappbar sind, **dadurch gekennzeichnet, dass** der Himmel (14) aus Polyethylenterephtalat (PET) gefertigt ist.

2. Dachmodul nach Anspruch 1, **dadurch gekennzeichnet, dass** der Himmel (14) als Vlies aus PET-Fasern ausgebildet ist.

3. Dachmodul nach Anspruch 1 oder 2, **dadurch gekennzeichnet, dass** die Faltlinien (20, 26, 28) als von der der Außenschale (12) zugewandten Seite des Himmels (14) in den Himmel eingeschnittene Kerben ausgebildet sind.

4. Dachmodul nach Anspruch 3, **dadurch gekennzeichnet, dass** die Faltlinien (20, 26, 28) mittels Lasereinschneiden eingeschnitten sind.

5. Dachmodul nach einem der vorhergehenden Ansprüche, **dadurch gekennzeichnet, dass** der Himmel (14) eine an der Unterseite der Außenschale (12) angebrachte Trägerschicht (30) und eine Dekorschicht (32) aufweist, wobei sowohl die Trägerschicht als auch die Dekorschicht aus PET gefertigt sind und wobei die Dekorschicht auf die von der Außenschale abgewandte Seite der Trägerschicht klebstofffrei aufgeschmolzen ist.

6. Dachmodul nach einem der vorhergehenden Ansprüche, **dadurch gekennzeichnet, dass** mindestens ein Teil der Faltlinien (20) gekrümmt verläuft.

7. Dachmodul nach einem der vorhergehenden Ansprüche, **dadurch gekennzeichnet, dass** der Himmel (14) im Bereich von Kreuzungspunkten von Faltlinien (20, 26, 28) jeweils mit einer Aussparung (22) versehen ist.

8. Dachmodul nach einem der Ansprüche 1 bis 5, **dadurch gekennzeichnet, dass** der Himmel (14) einen vorderen Bereich (42) und einen hinteren Bereich (44) umfasst, wobei der vordere und der hintere Bereich jeweils einen mittleren Abschnitt und beiderseits des mittleren Abschnitts jeweils einen Randabschnitt (46) umfassen, der bezüglich des mittleren Abschnitts nach unten klappbar ist, und wobei der vordere und der hintere Bereich für den Durchtritt durch die Karosserieöffnung bezüglich des zentralen Bereichs (40) nach unten klappbar sind.

9. Dachmodul nach einem der vorhergehenden Ansprüche, **dadurch gekennzeichnet, dass** die Außenschale (12) eine Außenhaut aufweist, die mit einer Trägerstruktur hinterpresst ist, an welcher der Himmel (14) befestigt ist.

10. Dachmodul nach einem der vorhergehenden Ansprüche, **dadurch gekennzeichnet, dass** der Himmel (14) aus mehreren Lagen besteht, die eine Dekorschicht (32), einen Dekorrücken (31), ein zusätzliches Abstandsvlies (29) sowie eine Trägerschicht (30) umfassen.

11. Verfahren zum Herstellen eines Dachmoduls (10) für ein Fahrzeug, welches von oben in einer Karosserieöffnung montierbar ist und eine feste Außenschale (12) umfasst, wobei ein Himmel (14), der aus PET gefertigt wird, in seinem zentralen Bereich (16, 40) von unten fest an der Außenschale angebracht wird, und wobei in dem Himmel Faltlinien (20, 26, 28) ausgebildet werden, entlang derer die Randbereiche (18, 24,42, 44,46) des Himmels bezüglich des zentralen Bereichs für die Montage des Dachmoduls nach unten klappbar sind.

12. Verfahren nach Anspruch 11, **dadurch gekennzeichnet, dass** die Faltlinien (20, 26, 28) von der der Außenschale (12) zugewandten Seite des Himmels (14) mittels Lasereinschneiden als Kerben in den Himmel eingeschnitten werden.

13. Verfahren nach Anspruch 11 oder 12, **dadurch gekennzeichnet, dass** der Himmel (14) eine an der Unterseite der Außenschale (12) angebrachte Trägerschicht (30) und eine Dekorschicht (32)) aufweist, wobei sowohl die Trägerschicht als auch die Dekorschicht aus PET gefertigt werden und wobei die Dekorschicht auf die von der Außenschale abgewandte Seite der Trägerschicht klebstofffrei aufgeschmolzen wird.

## Claims

1. Vehicle roof module which is mountable from above into an opening of the vehicle body and which comprises a rigid outer shell (12) and an inner roof lining (14) which is fixedly attached to the outer shell in a central area (16, 40) of the outer shell form below, wherein border areas (18, 24, 42, 44, 46) of the inner roof lining can be folded downwards along folding lines (20, 26, 28) of the inner roof lining and with respect to the central area for mounting the roof module, **characterized in that** the inner roof lining (14) is made of polyethyleneterephthalate (PET).

2. Roof module according to claim 1, **characterized in that** the inner roof lining (14) is made as a nonwoven of PET-fibers.

3. Roof module according to claim 1 or 2, **characterized in that** the folding lines (20, 26, 28) are notches which are cut into the side of the inner roof lining (14) which is facing towards the outer shell (12).

4. Roof module according to claim 3, **characterized in that in that** the folding lines (20, 26, 28) are cut by means of laser cutting.

5. Roof module according to anyone of the preceding claims, **characterized in that** the inner roof lining (14) has a carrier layer (30) attached to the bottom side of the outer shell (12), and a decoration layer (32), wherein the carrier layer as well as the decoration layer are made of PET and wherein the decoration layer is glue-free molten onto the side of the carrier layer facing away from the outer shell.

6. Roof module according to anyone of the preceding claims, **characterized in that** at least a part of the folding lines (20) proceeds in a curved manner.

7. Roof module according to anyone of the preceding claims, **characterized in that** the inner roof lining (14) is provided with cut-outs (22) in the area of crossing points of folding lines (20, 26, 28).

8. Roof module according to anyone of claims 1 to 5, **characterized in that** the inner roof lining (14) comprises a front area (42) and a back area (44) wherein the front and the back area each comprise a middle section and on both sides of the middle section a respective edge section (46) which can be folded downwards with respect to the middle section, and wherein the front area and the back area can be folded downwards with respect to the center section (40) for entering the opening of the vehicle body.

9. Roof module according to anyone of the preceding claims, **characterized in that** the outer shell (12) comprises an outer skin onto which the support structure is molded, and to which the inner roof lining (14) is attached to.

10. Roof module according to anyone of the preceding claims, **characterized in that** the inner roof lining (14) is composed of several layers which comprise a decoration layer (32), a back (31) of the decoration layer, an additional interspace nonwoven (29) as well as a carrier layer (30).

11. Method for the fabrication of a roof module (10) for a vehicle which is mountable from above into an opening of the vehicle body and which comprises a rigid outer shell (12), wherein an inner roof lining (14), which is made of PET, is attached to a central area (16, 40) of the outer shell from below and wherein in the inner roof lining folding lines (20, 26, 28) are comprised along which edge areas (18, 24, 42, 44, 46) of the inner roof lining are foldable downwards with respect to the central area for mounting the roof module.

12. Method according to claim 11, **characterized in that** the folding lines (20, 26, 28) are notches which are cut into the side of the inner roof lining (14) facing towards the outer shell (12) by means of laser cutting.

13. Method according to claim 11 or 12, **characterized in that** the inner roof lining (14) comprises a carrier layer (30) attached to the bottom side of the outer shell (12) and a decoration layer (32), wherein the carrier layer as well as the decoration layer are made of PET and wherein the decoration layer is glue-free molten onto the side of the carrier layer facing away from the outer shell.

## Revendications

1. Module de toit pour un véhicule, lequel est destiné à être monté par le haut dans une baie de la carrosserie et qui comporte une coque extérieure (12) fixe et un habillage de plafond (14) dont la zone centrale (16, 40) est accolée par le bas de manière fixe à la coque extérieure et dont les zones de bordure (18, 24, 42, 44, 46), en vue du montage du module de toit, peuvent être rabattues vers le bas par rapport à la zone centrale le long de lignes de pliage (20, 26, 28) réalisées dans l'habillage de plafond, **caractérisé en ce que** l'habillage de plafond (14) est réalisé en polyéthylènetéréphtalate (PET).

2. Module de toit selon la revendication 1, **caractérisé en ce que** l'habillage de plafond (14) est réalisé dans un non-tissé en fibres de PET.

3. Module de toit selon la revendication 1 ou 2, **caractérisé en ce que** les lignes de pliage (20, 26, 28) sont réalisées sous la forme d'entailles incisées dans l'habillage de plafond à partir de la face de l'habillage de plafond (14) orientée vers la coque extérieure (12).

4. Module de toit selon la revendication 3, **caractérisé en ce que** les lignes de pliage (20, 26, 28) sont incisées au moyen d'une coupe au laser.

5. Module de toit selon l'une quelconque des revendications précédentes, **caractérisé en ce que** l'habillage de plafond (14) comporte une couche de support (30), appliquée sur la face inférieure de la coque extérieure (12), et une couche de décoration (32), ladite couche de support et ladite couche de décoration étant réalisées en PET et la couche de décoration étant scellée sans adhésif sur la face de la couche de support, détournée de la coque extérieure.

6. Module de toit selon l'une quelconque des revendications précédentes, **caractérisé en ce qu'**au moins une partie des lignes de pliage (20) s'étend en formant une courbe.

7. Module de toit selon l'une quelconque des revendications précédentes, **caractérisé en ce que** l'habillage de plafond (14) est muni d'un évidement (22) dans la zone de chacun des points d'intersection des lignes de pliage (20, 26, 28).

8. Module de toit selon l'une quelconque des revendications 1 à 5, **caractérisé en ce que** l'habillage de plafond (14) comprend une zone avant (42) et une zone arrière (44), lesdites zone avant et zone arrière comportant chacune une partie centrale et une partie de bordure (46), qui est située respectivement de part et d'autre de la partie centrale et qui peut être rabattue vers le bas par rapport à la partie centrale, et lesdites zone avant et zone arrière étant rabattables vers le bas par rapport à la zone centrale (40) pour le passage à travers la baie de la carrosserie.

9. Module de toit selon l'une quelconque des revendications précédentes, **caractérisé en ce que** la coque extérieure (12) comporte une couche extérieure qui est sous-moulée par pression avec une structure de support, contre laquelle est fixé l'habillage de plafond (14).

10. Module de toit selon l'une quelconque des revendications précédentes, **caractérisé en ce que** l'habillage de plafond (14) est formé par plusieurs couches qui comportent une couche de décoration (32), un dos de décoration (31), un non-tissé d'écartement (29) supplémentaire, ainsi qu'une couche de support (30).

11. Procédé permettant la réalisation d'un module de toit (10) pour un véhicule, lequel est destiné à être monté par le haut dans une baie de la carrosserie et comporte une coque extérieure (12) fixe, dans lequel un habillage de plafond (14) réalisé en PET est accolé par sa zone centrale (16, 40) par le bas de manière fixe contre la coque extérieure, et des lignes de pliage (20, 26, 28) sont réalisées dans l'habillage de plafond, le long desquelles les zones de bordure (18, 24, 42, 44, 46) de l'habillage de plafond sont rabattables vers le bas par rapport à la zone centrale en vue du montage du module de toit.

12. Procédé selon la revendication 11, **caractérisé en ce que** les lignes de pliage (20, 26, 28) sont incisées sous forme d'entailles dans l'habillage de plafond au moyen d'une coupe au laser à partir de la face de l'habillage de plafond (14) orientée vers la coque extérieure (12).

13. Procédé selon la revendication 11 ou 12, **caractérisé en ce que** l'habillage de plafond (14) comporte une couche de support (30), appliquée sur la face inférieure de la coque extérieure (12), et une couche de décoration (32), ladite couche de support et ladite couche de décoration étant réalisées en PET et la couche de décoration étant scellée sans adhésif sur la face de la couche de support, détournée de la coque extérieure.
